# EUROPEAN PATENT APPLICATION

(11) **EP 1 661 776 A1**
(43) Date of publication of application: **31.05.2006**
(21) Application number: 04771346.6
(22) Date of filing: 06.08.2004
(51) Int. Cl.: B60R 21/26

(54) **INSTALLATION STRUCTURE OF GAS PRODUCER AND AIR BAG MODULE**

(30) Priority: 06.08.2003 JP 2003287406
(71) Applicant: NIPPON KAYAKU KABUSHIKI KAISHA, Tokyo 102-8172 (JP)
(72) Inventor: SAITO, Tetsuo, Himeji Fact. of NIPPON KAYAKU K. K, Himeji-shi, Hyogo 6792123 (JP); DOSAI, Takayoshi, Himeji Fact. of NIPPON KAYAKU, Himeji-shi Hyogo 6792123 (JP); SUEHIRO, Akihiko, Himeji Fact. of NIPPON KAYAKU, Himeji-shi, Hyogo 6792123 (JP); IZAKI, Naoki, 6700805 (JP)
(74) Representative: Intes, Didier Gérard André
(86) International application number: PCT/JP2004/011346
(87) International publication number: WO 2005/019002

(57) **Abstract**

A fitting structure of a gas generator (1) which is provided with a metal housing (10) constituted by an initiator shell (9) and a closure shell (8), a combustion chamber (12) which is formed inside the housing (10) and into which gas generants (11) generating a high-temperature gas through combustion are loaded, a filter member (13) disposed around the combustion chamber (12), an igniter (14) mounted into the housing (10) and igniting and burning the gas generants (11) inside the combustion chamber (12), and a plurality of gas discharge openings (7) formed in the housing (10) and discharging the gas generated in the combustion chamber (12), wherein either or both of the initiator shell (9) and the closure shell (8) constituting the housing (10) are provided with semi-spherical or semi-oval end plate portions (18, 16) and cylindrical portions (17, 15) having a diameter D formed continuously from these end plate portions (18, 16), a gas generator whose H/D of a ratio of the bottom distance H between the end plate portion (18) of the initiator shell (9) and that (16) of the closure shell 1 (8) to the diameter D of the cylindrical portions (17, 15) is in the range from 0.4 to 1.3 is fitted to a retainer (2) of an airbag module for a front passenger seat of the automobile, a plurality y of gas discharge openings (7) are symmetrically formed in the housing (10) so as to discharge the gas in two directions, and the housing (10) is fitted so that the gas discharge openings (7) are opened in the longitudinal direction (F - F) of the retainer (2).

## Description

### Technical Field

The present invention relates to a fitting structure of a gas generator to be used in an airbag module for a front passenger seat of an automobile and to the airbag module having the fitting structure.

### Background Art

A gas generator which will rapidly inflate and deploy an airbag for protecting a passenger from an impact during a collision of the automobile is installed into an airbag module which is mounted into a steering wheel or an instrument panel.

Conventionally, gas generators fitted into an airbag module for a front passenger seat of an automobile mainly include cylindrical gas generators, for example, those described in Patent Document 1, etc.
Patent Document 1: Japanese Published Unexamined Patent Application-A No. 10-329638

However, these conventional cylindrical gas generators are complicated in fitting structure to a module and the gas generator itself becomes large for supplying a sufficient quantity of gas to an airbag so as to withstand an inner pressure upon generation of gas supplied from gas generants. Therefore, fitting of these gas generators imposes limitations on freely designing interior parts of an automobile and increases the manufacturing cost.

### Disclosure of the Invention

### Problems to be Solved by the Invention

The present invention has been made in view of the above-described problems, and an object of the invention is to provide a fitting structure of a gas generator which can be easily fitted into an airbag module and the airbag module having the structure.

### Means for Solving the Problems

The present invention has the following several features for attaining the object. In the present invention, the following main features are provided solely or in combination with other parts, whenever necessary.

An airbag module for a front passenger seat of the automobile according to the present invention is provided with a gas generator, a retainer which fixes the gas generator and also is fitted to an instrument panel of the automobile and an airbag which is inflated and deployed by gas supplied from the gas generator.
The gas generator is provided with a metal housing made of an initiator shell and a closure shell, a combustion chamber formed inside the housing and equipped with gas generants for generating a high-temperature gas through combustion, filter members disposed around the combustion chamber, an igniter which is mounted in the housing and ignites and burns the gas generants inside the combustion chamber and a plurality of gas discharge openings which are formed in the housing and discharges the gas generated in the combustion chamber.

Either or both of the initiator shell and the closure shell constituting the housing are provided with semi-spherical or semi-oval end plate portions and cylindrical portions having a diameter D formed continuously from the end plate portions. The ratio of H/D which is a ratio of the bottom distance H between the end plate portion of the initiator shell and that of the closure shell to the diameter D of the cylindrical portions is in the range from 0.4 to 1.3, preferably from 0.6 to 1,3 and more preferably from 1.0 to 1.3.

The fitting structure of the gas generator to be used in an airbag module for a front passenger seat of the automobile according to the present invention is the fitting structure of the gas generator applicable to the airbag module of the above-described present invention.

A plurality of gas discharge openings are symmetrically formed in the housing so as to discharge the gas in two directions .
The housing is fitted so that the gas discharge openings are opened in a longitudinal direction of the retainer.
Further, where the gas discharged in a longitudinal direction of the retainer is discharged radially centering around the central line of the cylindrical portions of the housing, a radiation angle from the housing is within 120 degrees, preferably within 110 degrees and more preferably within 100 degrees.

The above-described constitution provides a remarkably simple fitting of the gas generator to the retainer, thereby making it possible that t the gas immediately after being discharged from the gas discharge openings will hardly contact with the side wall portion located at the transverse front end which intersects with the retainer in a longitudinal direction. Therefore, the retainer will be deformed or damaged less frequently by the gas discharged from these gas discharge openings.
The present invention makes it possible to provide the same effect irrespective of whether the discharged gas is high in temperature or not. However, a high-temperature gas is more preferable.
Further, as long as the ratio of H/D which is a ratio of the bottom distance H between the end plate portion of the initiator shell and that of the closure shell to the diameter D of the cylindrical portions is in the above-described range, deformation of the housing can be prevented upon a rise in the pressure inside the housing.

Therefore, the present invention is available in a smaller size, and when used as a gas generator for a front passenger seat, an occupation area of the gas generator is also made small. Therefore, interior trims of the automobile such as an instrument panel can be designed at a greater degree of freedom.
Further, the present invention makes it possible to significantly reduce the number of parts when used as an airbag module, resulting in a smaller size thereof.

In addition, if the radiation angle of the gas discharged from the housing is provided as described above, the gas immediately after being discharged from the housing will hardly contact with the side wall located at the transverse front end which intersects with a longitudinal direction of the retainer. Therefore, the gas discharged from the housing will reliably not deform or damage the retainer, etc., and can be effectively supplied to an airbag.

### Effects of the Invention

In the present invention relating to the fitting structure of the gas generator and the airbag module, the gas generator can be quite easily and reliably fitted to the airbag module, making it possible to significantly reduce the number of parts as compared with conventional cylindrical gas generators and also omit the assembly process, leading to a significant reduction in manufacturing cost. It is also possible to make the entire dimensions of the airbag module smaller and provide an effect that interior trims of the automobile such as the instrument panel can be designed at a much greater degree of freedom.

### Best Mode for Carrying Out the Invention

Hereinafter, an explanation will be made for embodiments of the fitting structure of the gas generator and the airbag module in the present invention with reference to the drawings.

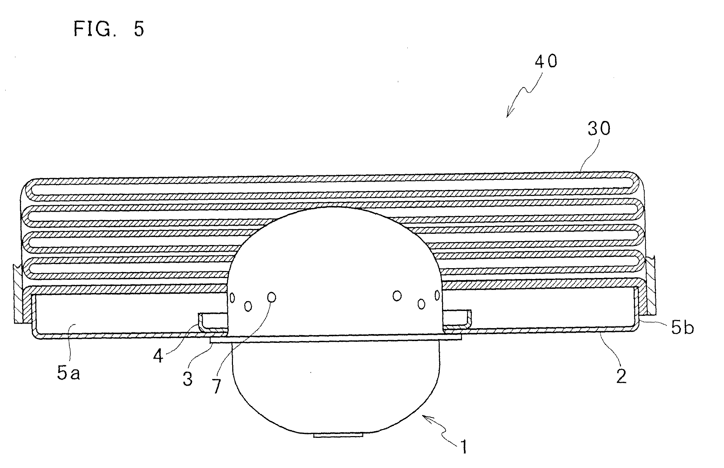

As shown in FIG. 5, an airbag module 40 for a front passenger seat of the automobile in the present embodiment is provided with a gas generator 1, a retainer 2 which fixes the gas generator and is also fitted to an instrument panel of the automobile and an airbag 30 which is inflated and deployed by gas supplied from the gas generator 1.
The fitting structure of the gas generator 1 to be used in an airbag module for a front passenger seat of the automobile in the present embodiment is the fitting structure of the gas generator 1 applicable to the airbag module of the above-described present embodiment.

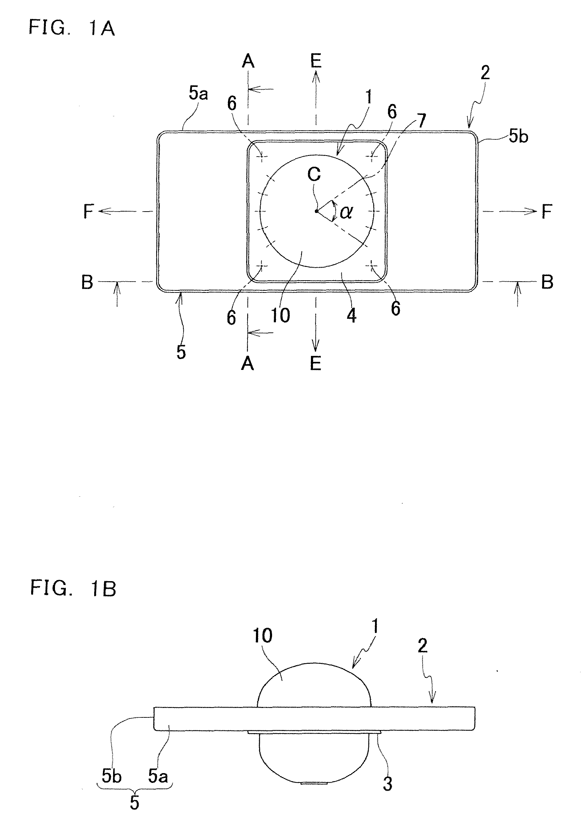

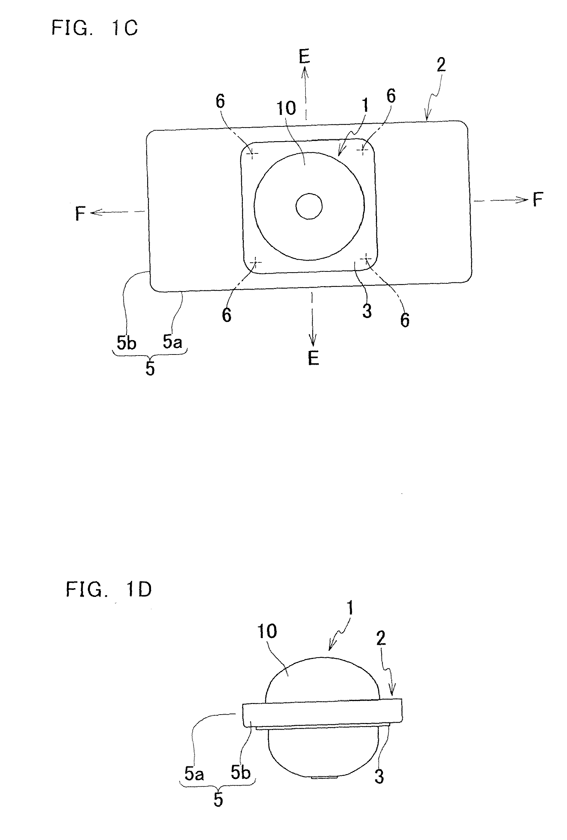

FIGs. 1A, 1B, 1C and 1D are drawings for explaining one embodiment of the fitting structure of the gas generator 1 in the present embodiment. FIG. 1A is a plain view, FIG. 1B is a front view, FIG. 1C is a bottom plain view and FIG. 1D is a side view from either side of the fitting structure of the gas generator.

In the fitting structure of the gas generator 1 according to the present embodiment, the gas generator 1 is placed approximately at the center of the retainer 2, and a flange 3 provided on the gas generator 1 and fitting member 4 are fixed and fitted to the retainer 2 by a fastening member 6.

The retainer 2 is in a rectangular shape having a longitudinal direction F - F and a transverse direction E - E which intersects therewith. It is preferable that the longitudinal direction F - F is approximately orthogonal to the transverse direction E - E. The retainer 2 is made of a metal such as stainless steel, aluminum and iron. Four side of a thin plate is folded orthogonally to a face of the retainer 2 on which the gas generator 1 is placed, thereby forming a side wall 5. The side wall 5 is provided with a side wall 5a located at the front end of the retainer in the transverse direction E - E and a side wall 5b located at the front end of the retainer in the longitudinal direction F - F.

Further, as will be explained later, the retainer 2 is fitted in such a way that gas discharged from the gas generator 1 will not directly contact with the side wall 5a located at the front end of the retainer in the transverse direction E - E immediately after the gas is discharged from the gas generator 1. Therefore, the side wall 5a is not deformed or damaged during discharge of the gas. For this reason, the retainer 2 may be made of resin, etc., in addition to the above-described metals. The present embodiment makes it possible to provide the same effect irrespective of whether the discharged gas is high in temperature or not. However, a high-temperature gas is more preferable.

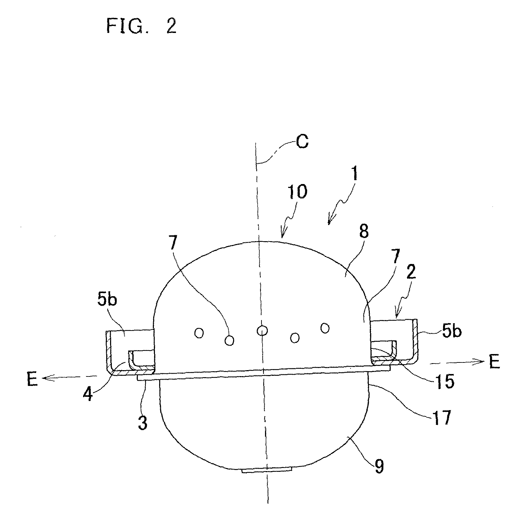

FIG. 2 is a cross-sectional view taken along line A - A in FIG. 1A. As shown in FIG. 2, in the gas generator 1, a plurality of gas discharge openings 7 are formed in a housing 10 constituted by an initiator shell 9 and a closure shell 8.

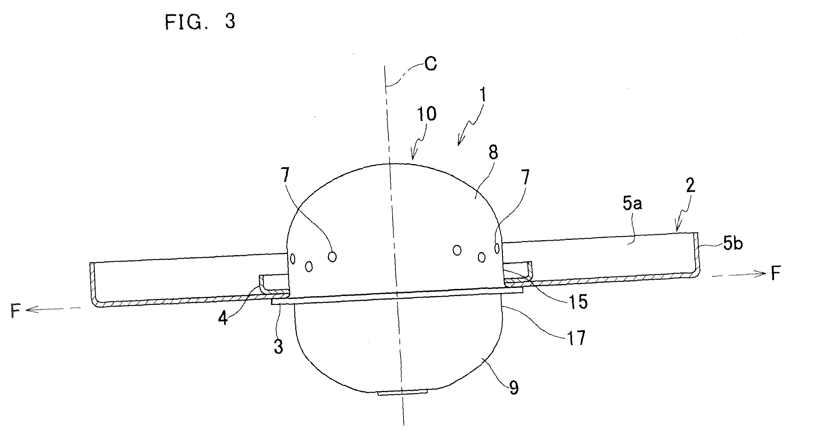

FIG. 3 is a cross-sectional view taken along line B - B in FIG. 1A. As shown in FIG. 3, gas discharge openings 7 are symmetrically formed at the central line C of the cylindrical portions 15 and 17 of the housing 10 so that gas supplied from the gas generator 1 can be discharged substantially in two directions, or in the longitudinal direction F - F of the retainer. Here, the two directions mean directions in which the gas is discharged to the side wall 5b located at the longitudinal front end of the retainer 2 symmetrical to the housing 10 when the gas generator 1 is mounted on the retainer 2. Then, the housing 10 is fitted in such a way that the gas discharge openings 7 are substantially opened in a longitudinal direction of the retainer 2 to prevent the gas immediately af ter being discharged from making direct contact with the side wall 5a located at the front end of the retainer 2 in the transverse direction E - E. In other words, the housing 10 is fitted in such a way that the two directions at which the gas is discharged are substantially along the longitudinal direction of the retainer.

Further, as shown in FIG. 1A, where the gas discharged in a longitudinal direction of the retainer 2 is discharged radially at the center of the central line C of the cylindrical portions of the housing, a radiation angle α from the housing 10 is within 120 degrees, preferably within 110 degrees and more preferably within 100 degrees.
The radiation angle α indicates an angle which expands in the transverse direction (E - E) at the center of the longitudinal direction (F- F) of the retainer 2 which passes through the central line C of the cylindrical portions 17 and 15 of the housing.
Therefore, the gas is prevented from directly contacting with the side wall 5a located at the transverse front end of the retainer 2 immediately after the gas is discharged from these gas discharge openings 7, thereby making it possible to prevent deformation or damage of the side wall 5a. The present embodiment makes it possible to provide the same effect, irrespective of whether the di scharged gas is high in temperature or not. However, a high-temperature gas is more preferable.

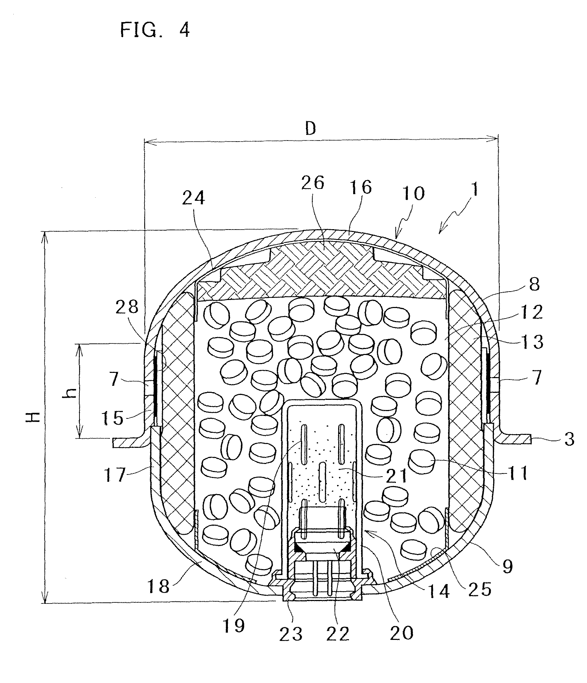

FIG. 4 is a cross-sectional view showing one example of the gas generator 1 used in the present embodiment. In FIG. 4, the gas generator 1 is provided with a housing 10, a filter member 13 and an igniter 14.
The housing 10 is an approximately spherical housing 10 constituted by an initiator shell 9 and a closure shell 8. The housing is made of metals such as iron, stainless steel, aluminum and other steel products.

A combustion chamber 12 is formed inside the housing 10. The combustion chamber 12 is equipped with gas generants 11 which generate a high-temperature gas through combustion. A plurality of gas discharge openings are formed in the housing 10. Gas generated at the combustion chamber 12 is discharged from a plurality of these gas discharge openings 7.
The filter member 13 is disposed around the combustion chamber 12. The igniter 14 is mounted into the housing 10. the gas generants 11 are ignited and burnt by the igniter 14 inside the combustion chamber 12.

The closure shell 8 is comprised of a cylindrical portion 15 having the diameter D, a semi-spherical end plate portion 16 formed continuously from the cylindrical portion 15 and a flange 3 extending outwardly from the cylindrical portion 15. Further, in the housing 10 formed by joining the initiator shell 9 with the closure shell 8, H/D, of a ratio of the bottom distance H between the end plate portion 18 of the initiator shell 9 and the end plate portion 16 of the closure shell 8 to the diameter D of the cylindrical portions 17 and 15, is in a range from 0.4 to 1.3, preferably from 0.6 to 1.3 and more preferably from 1.0 to 1.3.

Where the above-described ratio of H/D is less than 0.4, the gas generator may not be assembled due to structural features. Where it exceeds 1.3, it approaches the cylindrical-type gas generators in structure. Therefore, setting the ratio within the above-described range can prevent deformation of the housing 10 even upon a rise in the pressure inside the gas generator 1 and also makes the gas generator 1 smaller in size.

A plurality of gas discharge openings 7 are formed in the cylindrical portion 15. Since the gas discharge openings 7 are formed in a zigzag form, the gas generated inside the housing 10 can be discharged without accumulation, thereby preventing damage of a filter member 13. Further, the filter member 13 can be used in a wider area to make an effective use of the filter member 13. These gas discharge openings 7 are formed not only in a zigzag form but also in a plurality of arrays, for example, in two or three arrays for providing the same effect. In addition, they are available in a different opening diameter, for example, the gas discharge openings 7 on the upper array are made larger in diameter than those on the lower array. These gas discharge openings 7 may be also disposed linearly in one array.

These gas discharge openings 7 hermetically seal the combustion chamber 12 by a rupture member 28 such as a band-form aluminum tape attached to an inner circumference of a cylindrical portion 15. The length of the cylindrical portion 15 is usually 5mm or longer, preferably in the range from 5mm to 30mm and more preferably from 10mm to 30mm. It is, therefore, possible to use a band-form tape as the rupture member 28 and also attach the rupture member 28 easily and securely.

The end plate portion 16 is in a semi-spherical shape having a curvature radius R, and the ratio of the diameter D of the cylindrical portion 15 to the curvature radius of D/R is preferably in the range from 0.3 to 2, more preferably from 0.9 to 2 and further more preferably from 1.2 to 2. As explained above, the end plate portion is made available in a semi-spherical shape or a semi-oval shape, thereby making it possible to remove a part on which pressure of the gas generated by the combustion chamber 12 concentrates. Therefore, the gas generator 1 can be constituted by a smaller number of parts, rendering the deformation of the housing 10 to a minimum during gas generation, even when simply constructed. Further, since the deformation of the housing 10 can be rendered to a minimum, the pressure inside the housing 10 can be raised when the gas generator 1 is made small in size, thereby making it possible to discharge gas capable of sufficiently inflating an airbag for a front passenger seat.

As with the above-described closure shell 8, the initiator shell 9 which is joined to the closure shell 8 by pressure contact or welding is comprised of a cylindrical portion 17 and a semi-spherical end plate portion 18 formed continuously from the cylindrical portion 17. Then, an igniter 14 is installed at the center of the end plate portion 18.

As with the end plate portion 16 of the closure shell 8, the end plate portion 18 of the initiator shell 9 is also formed in an approximately semi-spherical shape or in a semi-oval shape. When joined to the closure shell 8 and made into an integral portion, it is possible to form an approximately spherical or an approximately oval housing 10. The initiator shell 9 and the closure shell 8 are preferably in the range from 1.5mm to 3mm in thickness.

The igniter 14 provided at the center of the end plate portion 18 is comprised of a closed-end inner cylindrical body 20 having a plurality of enhancer openings 19 in the periphery, an enhancer 21 loaded into the inner cylindrical body 20 and a squib 22 mounted so as to be in contact with the enhancer 21.

The inner cylindrical body 20 is fixed to an igniter holder 23 by crimping or any other appropriate method. Then, the inner cylindrical body 20 is fixed to the initiator shell 9 by fixing the igniter holder 23 to the end plate portion 18 by welding or any other appropriate method. Further, the inner cylindrical body 20 is in a long-cylindrical shape extending from one end of the combustion chamber 12 formed inside the housing 10 to an approximate center of the combustion chamber 12. A plurality of enhancer openings 19 are formed in the periphery in a long-opening shape along the axial direction of the inner cylindrical body 20. These enhancer openings 19 are formed in a zigzag form so that those disposed adjacent to each other along the axial direction of the inner cylindrical body 20 are not provided in parallel . Therefore, a heat current spouted from the igniter 14 is effectively spouted into a whole part of the combustion chamber 12. Further, these enhancer openings 19 may be made available in a round-opening shape, in addition to the long-opening shape. They do not need to be provided in a zigzag form.

A filter member 13 disposed around the combustion chamber is provided along the inner wall of the cylindrical portions 15 and 17 inside the housing 10 constituted by the closure shell 8 and the initiator shell 9. The filter member 13, for example, is manufactured inexpensively by forming annularly bulk materials of metal wires or metal windings such as plain stitch wire netting, square-weave wire netting and crimped wire netting. The filter member 13 is pressed to the inner wall side of the housing 10 by presser members 24 and 25 respectively provided on inner faces of the end plate portions 16 and 18 of the closure shell 8 and the initiator shell 9.

Gas generants 11 are loaded into an inner circumference of the filter member 13. Then, these gas generants 11 are burnt by a heat current from the igniter 14 in the combustion chamber 12.

The gas generants 11 are non-azide compositions and may be used as those made of fuels, oxidizers and additives (binder, slag-forming agent and combustion-adjusting agent).

Fuels include, for example, nitrogen-containing compounds. Nitrogen-containing compounds include one or more types of mixtures selected from triazole derivatives, tetrazole derivatives, guanidine derivatives, carbon amide derivatives, hydrazine derivatives, urea derivatives and ammine complexes.

Triazole derivatives include, for example, 5-oxo-1,2,4-triazole and amino triazole. Tetrazole derivatives include, for example, tetrazole, 5-aminotetrazole, aminotetrazole nitrate, nitroaminotetrazole, 5,5'-bi-1H-tetrazole, 5,5'-bi-1H-tetrazole diammonium salt, 5,5'-azotetrazole diguanidium salt. Guanidine derivatives include, for example, guanidine, nitroguanidine, cyanoguanidine, triaminoguanidinenitrate, guanidine nitrate, aminoguanidine nitrate and guanidine carbonate. Azodicarbonamide derivatives include, for example, azodicarbonamide. Hydrazine derivatives include, for example, carbohydrazide, carbohydrazide nitrate complex, dihydrazide oxalate and hydrazine nitrate complex.

Urea derivatives include, for example, biurets. Ammine complexes include hexaamumine copper complex, hexaammine cobalt complex, tetraammine copper complex and tetraammine zinc complex.

Of these nitrogen-containing compounds, one or more types of compounds selected from tetrazole derivatives and guanidine derivatives are preferable, and nitroguanidine, guanidine nitrate, cyanoguanidine, 5-aminotetrazole, aminoguanidine nitrate and guanidine carbonate are particularly preferable.

These nitrogen-containing compounds in the gas generants 11 are different in mixture ratio, depending on the number of carbon atoms, hydrogen atoms and other atoms to be oxidized in the molecular formulae, preferably in the range from 20% by weight to 70% by weight and more preferably in the range from 30% by weight to 60% by weight. Further, the nitrogen-eontaining compounds are different in absolute value of the mixture ratio, depending on types of oxidizer to be added to gas generants. However, the concentration of trace amount CO in generated gas will increase where an absolute value of the mixture ratio in the nitrogen-containing compounds is greater than a total oxidation theoretical amount. In contrast, the concentration of trace amount NOx in the generated gas will increase where an absolute value of the mixture ratio in the nitrogen-containing compounds is equal to or lower than a total oxidation theoretical amount. Therefore, most preferable is a range in which both of them are optimally balanced.

Preferable oxidizers include those at least selected from one type of cation-containing nitrates, nitrites and perchlorates selected from alkaline metals, alkaline earth metals, transition metals and ammonium. Also usable are oxidizers other than nitrates, namely, nitrites and perchlorates which are frequently used in an airbag inflator field. However, they will decrease in number of oxygen in nitrite molecules as compared with nitrate molecules or may reduce the production of fine powder mist easily discharged outside the bag, and therefore nitrates are preferable. Nitrates include, for example, sodium nitrate, potassium nitrate, magnesium nitrate, strontium nitrate, phase stabilized ammonium nitrate and basic copper nitrate. Preferable are strontium nitrate, phase stable ammonium nitrate and basic copper nitrate.

A mixture ratio of oxidizers in the gas generants 11 is different in absolute value, depending on types and quantities of nitrogen-containing compounds to be used, and preferably in the range from 30% by weight to 80% by weight. The ratio is in particular preferably in the range from 40% by weight to 75% by weight, taking into consideration the concentrations of the above-described CO and NOx.

Any binders may be usable as an additive as long as they do not badly affect a combustion behavior of gas generants, significantly. Binders include, for example, organic binders such as metallic salts of earboxymethylcellulose, methylcellulose, hydroxyethylcellulose, cellulose acetate, cellulose propionate, cellulose acetate butyrate, nitrocellulose, microcrystalline cellulose, guar gum, polyvinyl alcohol, polyacrylamide, polysaccharide derivatives (e.g., starch) and stearate as well as inorganic binders such as molybdenum disulfide, synthetic hydroxytalcite, acid clay, talc, bentonite, diatomaceous earth, kaolin, silica and alumina.

A mixture ratio of binders is preferably in the range from 0% by weight to 10% by weight for press molding and from 2% by weight to 15% by weight for extrusion molding. Molded articles will be increased in breaking strength with an increase in an added quantity of binders. However, when the number of carbon atoms and hydrogen atoms in compositions is increased and the concentration of trace amount CO gas which is an incomplete combustion product of carbon atom is elevated, the quality of generated gas is deteriorated. lt is preferable to use binders in a minimum quantity because they may inhibit burning of gas generants. In particular, a quantity of binders exceeding 15% by weight may require a relatively larger quantity of oxidizers to reduce a relative percentage of fuels, thereby making it difficult to provide a practicable gas generator system.

Further, slag-forming agents may be added as compositions other than binders. Slag-forming agents are added to facilitate filtration of a filter member 13 inside the gas generator 1 through interactions with metallic oxides in particular coming from oxidizer compositions in gas generants.

Slag-forming agents include natural clays mainly made with alumino silicate such as silicon nitride, silicon carbide, acid clay, silica, bentonite and kaolin, synthetic clays such as synthetic mica, synthetic kaolinite and synthetic smectite and those selected from talc which is a type of hydrous magnesium silicate mineral, etc. Of these materials, acid clay and silica are preferable and acid clay is particularly preferable. A mixture ratio of slag-forming agents is preferably in the range from 0% by weight to 20% by weight and particularly preferably from 2% by weight to 10% by weight. An excessively large quantity of agents will reduce the linear burning velocity or gas generation efficiency, while an excessively small quantity will not provide a full slag-forming function.

Preferable combinations of gas generants 11 are gas generants which contain 5-aminotetrazole, strontium nitrate, synthetic hydrotalcite and silicon nitride, and those which contain guanidine nitrate, strontium nitrate, basic copper nitrate and acid clay.

Combustion-adjusting agents may also be added, whenever necessary. Combustion-adjusting agents include explosive compounds such as metallic oxide, ferrosilicon, activated carbon, graphite, hexogen, octogen and 5-oxo-3-nitro-1,2,4-triazole. A mixture ratio of combustion-adjusting agents is preferably in the range from 0% by weight to 20% by weight, and particularly preferably from 2% by weight to 10% by weight. An excessively large quantity of agents will reduce the gas generation efficiency, while an excessively small quantity will not provide a sufficient burning velocity.

The above-described gas generants 11 are preferably molded articles by press molding or extrusion molding and most preferably by extrusion molding. They may be available, for example, in the shape of a pellet (corresponding to one form of tablets generally found in drugs), circular column, tube, disk or hollow body with both ends closed. The tubular shape includes a cylindrical shape, and the cylindrical shape includes a single-pore cylindrical shape and a porous cylindrical shape. The hollow body shape with both ends closed includes a cylindrical shape with both ends closed. Further a state in which molded articles of gas generants 5 with both ends closed means a state in which pores opened at both ends are closed by two forces coming from the outside to the inside. The pores may be available either in a completely closed state or an incompletely closed state.

An explanation will be made for how to manufacture hollow-body-shaped gas generants 11 with both ends closed. The above-described non-azide based compositions made with a nitrogen-containing compound, an oxidizer, a slag-forming agent and a binder are at first mixed by using a V-type mixer, a ball mill, etc. Then, the resultant is mixed, with water or a solvent (for example, ethanol) added, to obtain a bulk ingredient in a wet state. I n this instance, the wet state means a state having plasticity to some extent in which water or a solvent is contained, preferably in the range from 10% by weight to 25% by weight and more preferably from 13% by weight to 18% by weight.

Thereafter, the extrusion-molded hollow cylindrical molded articles are subjected to pressing treatment at a uniform interval to obtain cylindrical molded articles with both ends closed. Usually, the hollow cylindrical molded articles are subjected to pressing treatment at a uniform interval and then cut off by folding them at the respectively closed recesses. Thereafter, they are dried at two stages, namely, usually in the range from 50°C to 60°C for 4 hours to 10 hours and then, usually in the range from 105°C to 120°C for 6 hours to 10 hours, thereby making it possible to obtain cylindrical shaped gas generants which have a space therein, with the ends closed. The thus obtained gas generants are usually in the range from 1.5mm to 8mm in length, preferably from 1.5mm to 7mm and more preferably from 2mm 6.5mm.

Further, the line burning velocity of the gas generants 11 is measured under constant pressure conditions and empirically follows following Vielle's formula.
r=aPⁿ
wherein r denotes linear burning velocity; a, constant number; P, pressure; n, pressure exponent. The pressure exponent of n denotes a slope obtained by logarithmic plotting of X axis pressure in relation to the logarithm of Y axis burning velocity.

A linear burning velocity of the gas generants used in the gas generator of the present embodiment is preferably in the range from 3mm/second to 60mm/second under 70kgf/cm² and more preferably from 5mm/second to 35mmlsecond. Further, the pressure exponent is preferably in the range of n = 0.90 or lower, more preferably n=0.75 or lower, still more preferably n=0.60 or lower and in particular preferably in the range from n=0.60 to n=0.30.

General methods for determining the linear burning velocity include a strand burner method, a compact motor method and a sealed pressure vessel method. More specificically, a test piece obtained by coating a restrictor on the surface after being molded to a predetermined size by press molding is used to determine the burning velocity in a high-pressure vessel by a fuse cutting method, etc. In this instance, the linear burning velocity is determined by referring to the pressure inside the high pressure vessel as a variable and the pressure exponent is determined in accordance with Vielle' s formula above.

Since preferable gas generants are non-azide gas generants, rawmaterials used are less harmful to humans. Further, a proper selection of fuel components and oxidizer components can reduce the heating value per mole of generated gas, making the gas generator smaller in size and lighter in weight.

Enhancers 21 to be mounted into an inner cylindrical body 20 include those in which the generally-available following compositions are contained. More specifically, they are metal powders such as B/KN0₃, oxidizer-oontaining compositions, compositions which contain nitrogen-containing compounds/oxidizers/metal powders and compositions similar to the above-described gas generants 11. The nitrogen-containing compounds include those which can be used as fuel components of the gas generants (such as aminotetrazole and guanidine nitrate). .The oxidizers include, for example, nitrates such as potassium nitrate, sodium nitrate and strontium nitrate. The metal powders include, for example, boron, magnesium, aluminum, magnalium (alloy of magnesium with aluminum), titanium, zirconium and tungsten. Preferable combinations are metal powders which contain 5-aminotetrazole, potassium nitrate and boron and those which contain guanidine nitrate, potassium nitrate and boron. Molding binders usable as gas generants may be contained in the range from 0% by weight to 10% by weight, whenever necessary.

Further, the enhancers 21 are available in the shape of a grain, granule, pellet (corresponding to a form of tablets generally found in drugs), circular column, tube or disk, etc. The tubular shape includes, for example, a cylindrical shape, and the cylindrical shape includes, for example, a single-pore cylindrical shape and a porous cylindrical shape. They are manufactured by powder mixture, granulation method (granulation by agitation, granulation by spray drying, extrusion granulation, rolling granulation and compression granulation) and tablet compression.

A cushion member 26 is provided at an end plate portion 16 of the closure shell 8 on the combustion chamber 12. The cushion member 26 is made with, for example, ceramic fiber and silicon foam, acting to prevent breakage of the gas generants 11 loaded inside the combustion chamber 12 such as cracks resulting from vibration.

The gas generator 1 of the present embodiment is a single-cylinder type gas generator. As shown in FIG. 5, it is mainly installed into a retainer 2 for an airbag module to be mounted into an instrument panel of the front passenger seat. A two-cylinder type gas generator can also be installed into the retainer 2.

The gas generator of the present embodiment makes it possible to mount the gas generants in a quantity the same as that used in conventional gas generators, even when the gas generator is made smaller in size, generating the gas in the same quantity with conventional gas generators. In the present gas generator, end plate portions 18 and 16 are formed in the housing to remove a part on which pressure concentrates inside the housing, thereby making it possible to sufficiently withstand a high pressure and also keep deformation of the housing to a minimum extent upon gas generation. This is the reason why the gas generator can be made smaller in size while gas generation is kept at the same quantity with conventional generators.

In FIG. 5, an airbag module 40 for a front passenger seat of the automobile of the present embodiment is provided with a gas generator 1, a retainer 2 which fixes the gas generator 1 and is also fitted to an instrument panel of the automobile and an airbag 30 which is inflated and deployed by gas supplied from the gas generator 1.
The airbag 30 is supported by paper tape, etc., with the folded state not illustrated, the peripheral border of which is fitted to side walls 5a and 5b of the retainer 2, while this state is kept. Therefore, gas discharged from the gas generator 1 is diffused upon contact with the side wall 5b of the retainer 2 and discharged into the airbag 30, by which the airbag 30 can be inflated.

As explained above, in an airbag module 40 connected to the automobile, for example, where a collision sensor detects a collision of the automobile, as shown in FIG. 4, a squib ignition circuit connected to an igniter 14 allows the igniter 14 to function (electrical ignition), thereby burning gas generants 11 in a combustion chamber 12 to generate a high-temperature gas. At this time, the pressure rises inside the combustion chamber 12, and the housing 10 is in an approximately spherical shape strong enough to sufficiently withstand the pressure rise inside the combustion chamber 12 and quite small in deformation. Then, the high-temperature gas generated inside the combustion chamber 12 is carried through a filter member 13 and discharged from a gas discharge opening 7 after breakage of a rupture member 28. When the high-temperature gas is carried through the filter member 13, the gas is cooled and residue is collected. Further, the filter member 13 is provided substantially across the combustion chamber 12, resulting in effective use of the filter member 13. It is, thus, possible to discharge gas which is sufficiently cooled and from which residue is sufficiently collected.

Gas discharge openings 7 are provided so that gas immediately after being discharged from the gas discharge opening 7 will not directly contact with the side wall 5a located at the transverse end of the retainer 2. Therefore, irrespective of whether the gas immediately after discharge is high in temperature or not, the airbag 30 can be securely inflated and deployed without deformation of the side wall 5a located at the transverse end of the retainer 2 due to impact by the gas immediately after discharge.

As explained above, according to the fitting structure of the gas generator of the present embodiment, the gas generator can be quite easily and securely fitted to the airbag module, thereby making it possible to significantly reduce the number of parts as compared with conventional cylindrical gas generators, and also omit the assembly process, leading to a great reduction in manufacturing cost. It is also possible to make the entire dimensions of the airbag module smaller and provide an effect that interior trims of the automobile such as the instrument panel can be designed at a much greater degree of freedom.

A gas generator used in the present embodiment will not be restricted to the above-described embodiment. For example, a gas generator which has been conventionally used for a driver's seat can also be used, if gas discharge openings are appropriately provided so that they will not directly contact with the side wall located at the transverse end of the retainer. Further, the gas generator is not restricted to one unit but two gas generators may be fitted to the retainer.

### [Reference example 1]

A method for manufacturing a gas generator of the present embodiment
In the gas generator shown in FIG. 4, a stainless steel member is molded and processed, in which bottom distance H between an end plate portion 16 and an end plate portion 18 is 75mm, diameter D of a cylindrica portion 15 is 70mm, length h of the cylindrical portion 15 is 16mm and thickness of the end plate portion 16 of the closure shell 8 is 2mm. A stainless steel member for an initiator shell 9 is also molded and processed, in which the thickness of an end plate is 2mm. Then, an igniter 14 is provided on an initiator shell 9 and a filter member 13 is also provided. After gas generants 11 are loaded into the filter member 13, a cushion member 26 is provided and fitted into the closure shell 8. Then, laser welding is performed to join the initiator shell 9 with the closure shell 8 to obtain a gas generator.

### [Reference example 2]

An example of manufacturing hollow-body shaped gas generants having both closed ends used in the gas generator of the present embodiment
Ethanol 3% by weight and water 13% by weight are added to a mixture of guanidine nitrate 43.5% by weight, strontium nitrate 25% by weight, basic copper nitrate 25% by weight, acid clay 2.5% by weight and polyacrylamide 4% by weight, and the resultant is mixed and kneaded to obtain a mixed mass, which is then extruded at a pressure of 8Mpa by using an extruder equipped with a dice having an inner diameter of 2mm and an inner hole pin having an outer diameter of 0.5mm at the exit. The thus prepared bar-like molded article is fed between molding gears, while taken up by using a feed belt, and provided with recesses at a space of 4 . 4mm by male teeth of the molding gear. The article is cut off by folding it at the recesses, dried for 8 hours at 55°C and further dried for 8 hours at 110°C to obtain gas generants.

The present invention has been described in the above-described preferred embodiments but is not restricted only thereto. It is to be understood that variations may be made without departing from the spirit and scope of the present invention.

### Industrial Applicability

The present invention that relates to the fitting structure of the gas generator and the airbag module has industrial applicability, namely, the gas generator can be quite easily and securely fitted to the airbag module, making it possible to significantly reduce the number of parts and also omit the assembly process, leading to a great reduction in manufacturing cost. It is also possible to make the entire dimensions of the airbag module smaller and provide an effect that interior trims of the automobile such as the instrument panel can be designed at a much greater degree of freedom.

### Brief Description of the Drawings

FIG. 1A is a plain view for explaining one example of the fitting structure of the gas generator in the present embodiment.
FIG. 1B is a front view for explaining one example of the fitting structure of the gas generator in the present embodiment.
FIG. 1C is a bottom view for explaining one example of the fitting structure of the gas generator in the present embodiment.
FIG. 1D is an explanatory side view from either side of one example of the fitting structure of the gas generator in the present embodiment.
FIG. 2 is a cross-sectional view taken along line A - A in FIG. 1A.
FIG. 3 is a cross-sectional view taken along line B - B in FIG. 1A.
FIG. 4 is a cross-sectional view showing one example of the gas generator used in the present embodiment.
FIG. 5 is a cross-sectional view showing one example of the airbag module used in the present embodiment.

### Description of Symbols

- 1:: Gas generator
- 2:: Retainer
- 3:: Flange
- 4:: Fitting member
- 5, 5a, 5b:: Side wall
- 6:: Fastening member
- 7:: Gas discharge opening
- 8:: Closure shell
- 9:: Initiator shell
- 10:: Housing
- 11:: Gas generants
- 12:: Combustion chamber
- 23:: Filter member
- 14:: Igniter
- 15:: Cylindrical portion
- 16:: End plate portion
- 17:: Cylindrical portion
- 18:: End plate portion
- 19:: Enhancer opening
- 20:: Inner cylindrical body
- 21:: Enhancer
- 22:: Squib
- 23:: Igniter holder
- 24, 25:: Presser member
- 26:: Cushion member
- 28:: Rupture member
- 30:: Airbag
- 40:: Airbag module
- line E-E:: Transverse direction
- line F-F:: Longitudinal direction
- C:: Central line of cylindrical portion
- D:: Diameter
- H:: Bottom distance
- h:: Length of cylindrical portion
- α:: Radiation angle

## Claims

**1.** A fitting structure of a gas generator which is provided with a metal housing (10) constituted by an initiator shell (9) and a closure shell (8), a combustion chamber (12) which is formed inside the housing (10) and into which gas generants (11) generating a high-temperature gas through combustion are loaded, a filter member (13) disposed around the combustion chamber (12), an igniter (14) mounted into the housing (10) and igniting and burning the gas generants (11) inside the combustion chamber (12) and a plurality of gas discharge openings (7) formed in the housing (10) and discharging the gas generated in the combustion chamber (12),
the fitting structure of the gas generator (1), in which either or both of the initiator shell (9) and the closure shell (8) constituting the housing (10) are provided with semi-spherical or semi-oval end plate portions (18, 16) and cylindrical portions (17, 15) having a diameter D formed continuously from these end plate portions (18, 16), the gas generator whose H /D of a ratio of the bottom distance H between the end plate portion (18) of the initiator shell (9) and that (16) of the closure shell (8) to the diameter D of the cylindrical portions (17, 15) is in the range from 0.4 to 1.3 is fitted to a retainer (2) of an airbag module for a front passenger seat of the automobile, and
wherein a plurality of gas discharge openings (7) are symmetrically formed in the housing (10) so as to discharge the gas in two directions, and the housing (10) is fitted so that the gas discharge openings (7) are opened in the longitudinal direction (F - F) of the retainer (2).

**2.** The fitting structure of the gas generator (1) according to Claim 1, wherein a radiation angle (α) from the housing (10) is within 120 degrees where gas discharged in the longitudinal direction (F-F) of the retainer is discharged radially at the center of the central line (C) of the cylindrical portions (17, 15) of the housing (10).

**3.** An airbag module which is provided with a metal housing (10) constituted by an initiator shell (9) and a closure shell (8), a combustion chamber (12) which is formed inside the housing (10) and into which gas generants (11) generating a high-temperature gas through combustion are mounted, a filter member (13) disposed around the combustion chamber (12), an igniter (14) mounted into the housing (10) and igniting and burning the gas generants (11) inside the combustion chamber (12), and a plurality of gas discharge openings (7) formed in the housing (10) and discharging the gas generated in the combustion chamber (12),
the airbag module (40), in which either or both of the initiator shell (9) and the closure shell (8) constituting the housing (10) are provided with semi-spherical or semi-oval end plate portions (18,16) and cylindrical portions (17, 15) having a diameter D formed continuously from these end plate portions (18, 16),
comprising: a gas generator (1) whose H/ D of a ratio of the bottom distance H between the end plate portion (18) of the initiator shell (9) and that (16) of the closure shell (8) to the diameter D of the cylindrical portions (17. 15) is in the range from 0.4 to 1.3, a retainer (2) which fixes the gas generator (1) and is also fitted to an instrument panel of the automobile, and an airbag (30) which is inflated and deployed by the gas supplied from the gas generator (1), and
wherein a plurality of gas discharge openings (7) are symmetrically formed in the housing (10) so as to discharge the gas in two directions, and the housing (10) is fitted so that the gas discharge openings (7) are opened in the longitudinal direction (F - F) of the retainer (2).
